**Europäisches Patentamt**

**European Patent Office**

**Office européen des brevets**

(19)

(11) Veröffentlichungsnummer: **0 241 642 B1**

(12) **EUROPÄISCHE PATENTSCHRIFT**

(45) Veröffentlichungstag der Patentschrift: **29.05.91**

(51) Int. Cl.⁵: **G01D 5/36**

(21) Anmeldenummer: **87100897.5**

(22) Anmeldetag: **23.01.87**

(54) Lichtelektrische Längen- oder Winkelmesseinrichtung.

(30) Priorität: **11.02.86 DE 3604215**

(43) Veröffentlichungstag der Anmeldung:
**21.10.87 Patentblatt 87/43**

(45) Bekanntmachung des Hinweises auf die
Patenterteilung:
**29.05.91 Patentblatt 91/22**

(84) Benannte Vertragsstaaten:
**AT CH DE ES FR GB IT LI NL SE**

(56) Entgegenhaltungen:
**CH-A- 646 784**
**DE-A- 2 952 106**
**DE-B- 1 548 708**
**US-A- 3 809 895**

**IBM TECHNICAL DISCLOSURE BULLETIN,
Band 18, Nr. 2, Juli 1975, Seiten 304-305, New
York, US; J.C. ENGELBRECHT et al.:
"Photocurrent equalization"**

**PATENT ABSTRACTS OF JAPAN, Band 9, Nr.
157 (P-369)[1880], 2. Juli 1985; & JP-A-60 35
217 (BROTHER KOGYO K.K.) 23-02-1985**

(73) Patentinhaber: **Dr. Johannes Heidenhain
GmbH
Dr.-Johannes-Heidenhain-Strasse 5 Postfach
1260
W-8225 Traunreut(DE)**

(72) Erfinder: **Schmitt, Walter, Ing. grad.
Hochgernstrasse 22
W-8225 Traunreut(DE)**

## Beschreibung

Die Erfindung betrifft eine lichtelektrische Längen- oder Winkelmeßeinrichtung gemäß dem Oberbegriff des Anspruchs 1.

Derartige Meßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Aus der DE-AS 1 548 708 ist eine lichtelektrische Längenmeßeinrichtung zur Messung der Relativlage zweier zueinander beweglicher Objekte bekannt, bei der die Teilung einer mit dem ersten Objekt verbundenen Maßverkörperung von einer mit dem zweiten Objekt verbundenen Abtasteinheit mit einer Lichtquelle zur Erzeugung eines periodischen Abtastsignals abgetastet wird. Der Lichtquelle ist ein zusätzliches Photoelement zur Erzeugung eines der Helligkeit der Lichtquelle proportionalen Helligkeitssignals zugeordnet, das eine Regeleinheit zur Regelung der Helligkeit der Lichtquelle zur Erzielung eines übereinstimmenden Temperaturganges zwischen der Regeleinheit und der Abtasteinheit beaufschlagt.

Der DE-AS 1 548 747 entnimmt man eine lichtelektrische Längenmeßeinrichtung zur Messung der Relativlage zweier zueinander beweglicher Objekte, bei der die Teilung einer mit dem ersten Objekt verbundenen Maßverkörperung von einer mit dem zweiten Objekt verbundenen Abtasteinheit mit einer Lichtquelle zur Erzeugung zweier periodischer Abtastsignale abgetastet wird. Der Lichtquelle ist ein zusätzliches Photoelement zur Erzeugung eines der Helligkeit der Lichtquelle proportionalen Helligkeitssignals zugeordnet, das mitsamt einem vorgegebenen Sollsignal eine Regeleinheit zur Regelung der Helligkeit der Lichtquelle zur Kompensation von Störeinflüssen im Strahlengang der Abtasteinheit beaufschlagt.

Aus der DE-PS 29 52 106 ist eine lichtelektrische Längenmeßeinrichtung zur Messung der Relativlage zweier zueinander beweglicher Objekte bekannt, bei der die Teilung eines mit dem ersten Objekt verbundenen Maßstabs von einer mit dem zweiten Objekt verbundenen Abtasteinrichtung mit zwei voneinander beabstandeten Abtasteinheiten abgetastet wird. Jede Abtasteinheit weist eine Lichtquelle, eine Abttastteilung auf einer gemeinsamen Abtastplatte sowie ein Photoelement auf. Die von den beiden Photoelementen der beiden Abtasteinheiten gewonnenen zwei periodischen Abtastsignale werden in analoger Form einander additiv überlagert, so daß sich eine höhere Meßgenauigkeit ergibt, da durch die beiden Abtasteinheiten ein insgesamt größerer Bereich der Teilung des Maßstabs als bei nur einer vorgesehenen Abtasteinheit abgetastet wird. Durch diese Maßnahme haben eventuelle Ungenauigkeiten der Teilung des Maßstabs kleinere Signalfehler zur Folge.

In der DE-OS 18 11 961 ist eine lichtelektrische Winkelmeßeinrichtung beschrieben, bei der die Teilung einer mit dem ersten Objekt verbundenen Teilscheibe von einer mit dem zweiten Objekt verbundenen Abtasteinrichtung mit zwei voneinander beabstandeten Paaren von einander diametral gegenüberliegenden Abtasteinheiten abgetastet wird. Jede Abtasteinheit weist eine Lichtquelle, eine Abtastteilung auf einer Abtastplatte sowie ein Photoelement auf. Die von den beiden Photoelementen jedes Paares von Abtasteinheiten gewonnenen zwei periodischen Abtastsignale werden einander in analoger Form additiv überlagert, so daß neben der Unwirksammachung von eventuellen Ungenauigkeiten der Teilung der Teilscheibe auch Exzentrizitätsfehler der Lagerung der Teilscheibe eliminiert werden.

Zur Eliminierung der vorgenannten Teilungsfehler und/oder Exzentrizitätsfehler müssen aber die maximalen Amplituden der zwei von den beiden jeweils zusammenwirkenden Abtasteinheiten gewonnenen periodischen Abtastsignale den gleichen Betrag oder ein bestimmtes vorgegebenes Betragsverhältnis aufweisen. Diese Bedingung muß aber über die gesamte Betriebsdauer bzw. Lebensdauer der Lichtquellen der Abtasteinheiten sichergestellt sein. Derartige handelsübliche Lichtquellen bei lichtelektrischen Meßeinrichtungen weisen im allgemeinen jedoch bezüglich ihrer Helligkeiten eine unterschiedliche Alterungscharakteristik auf, die zu einer Abweichung vom vorgegebenen Betragsverhältnis zwischen den maximalen Amplituden der periodischen Abtastsignale und damit zu Meßungenauigkeiten führen kann.

Der Erfindung liegt die Aufgabe zugrunde, bei einer lichtelektrischen Meßeinrichtung der genannten Gattung Meßungenauigkeiten infolge von unterschiedlichen Alterungserscheinungen der Lichtquellen der Abtasteinheiten auszuschließen.

Diese Aufgabe wird erfindungsgemäß durch die Merkmale der Ansprüche 1 und 2 gelöst.

Die mit der Erfindung erzielten Vorteile bestehen insbesondere darin, daß bei einer lichtelektrischen Meßeinrichtung mit wenigstens zwei separaten, voneinander beabstandeten Abtasteinheiten mit jeweils einer eigenen Lichtquelle, bei der die von den Abtasteinheiten gewonnenen periodischen Abtastsignale einander überlagert werden, mit einfachen Mitteln eine Konstanthaltung eines bestimmten vorgegebenen Betragsverhältnisses der maximalen Amplituden der periodischen Abtastsignale über die gesamte Betriebsdauer bzw. Lebensdauer der Lichtquellen der Abtasteinheiten trotz einer unterschiedlichen Alterungscharakteristik der Lichtquellen erzielt wird, so daß bei Längenmeßeinrichtungen Teilungsfehler der Teilung der Maßverkörperung und bei Winkelmeßeinrichtungen zusätzlich noch Exzentrizitätsfehler der Lagerung der Teilscheibe eliminiert werden können. An die Qualität der Lichtquellen bezüglich einer gleichen Alterungscharakteristik brauchen keine hohen Anforderungen gestellt zu werden, sondern es können preiswerte handelsübliche Lichtquellen verwendet werden. Durch eine Überwachung der Helligkeit der Lichtquellen auf einen nicht zu unterschreitenden Minimalwert kann für einen rechtzeitigen Austausch der Lichtquellen gesorgt werden.

Vorteilhafte Weiterbildungen der Erfindung entnimmt man den abhängigen Ansprüchen.

Ausführungsbeispiele der Erfindung werden anhand der Zeichnung näher erläutert.

Es zeigen

Figur 1      eine lichtelektrische Längenmeßeinrichtung in einer schematischen Seitenansicht;

Figur 2      eine erste Abtasteinheit in einem schematischen Querschnitt gemäß dem Schnitt 2-2 der Figur 1;

Figur 3      eine zweite Abtasteinheit in einem schematischen Querschnitt gemäß dem Schnitt 3-3 der Fig. 1;

Figur 4      ein Diagramm der Abtastsginale;

Figur 5      eine erste Regelschaltung;

Figur 6      eine erste Überwachungsschaltung;

Figur 7      eine Winkelmeßeinrichtung in einer schematischen Draufsicht;

Figur 8      eine zweite Überwachungsschaltung;

Figur 9      eine zweite Regelschaltung und

Figur 10      eine dritte Regelschaltung.

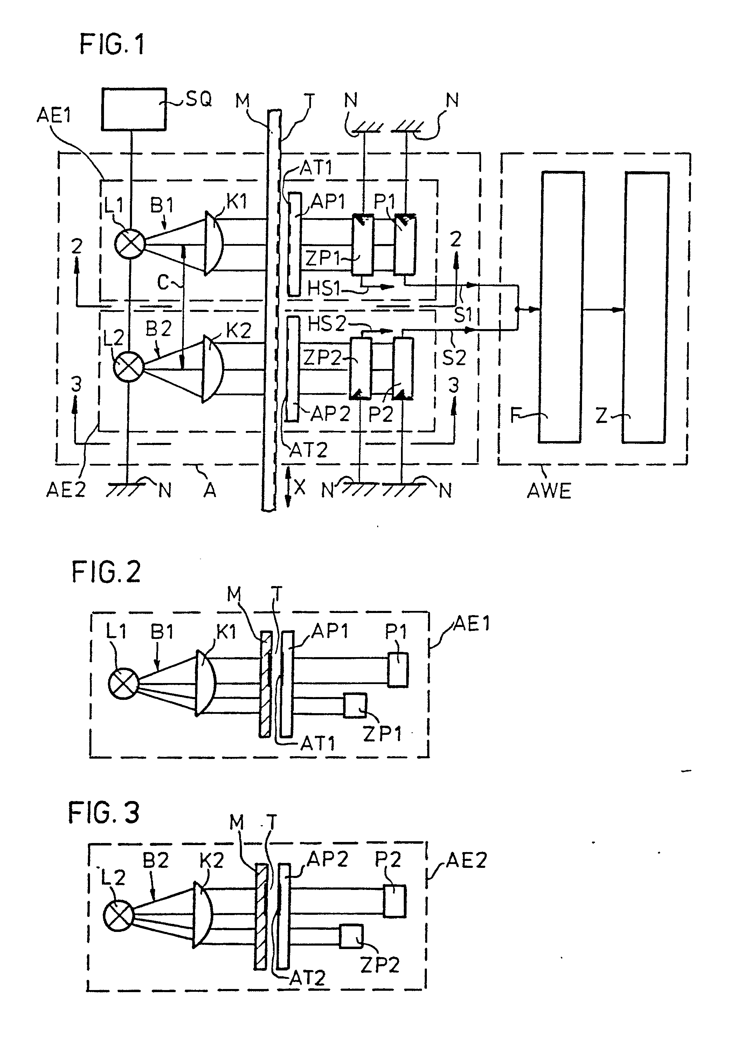

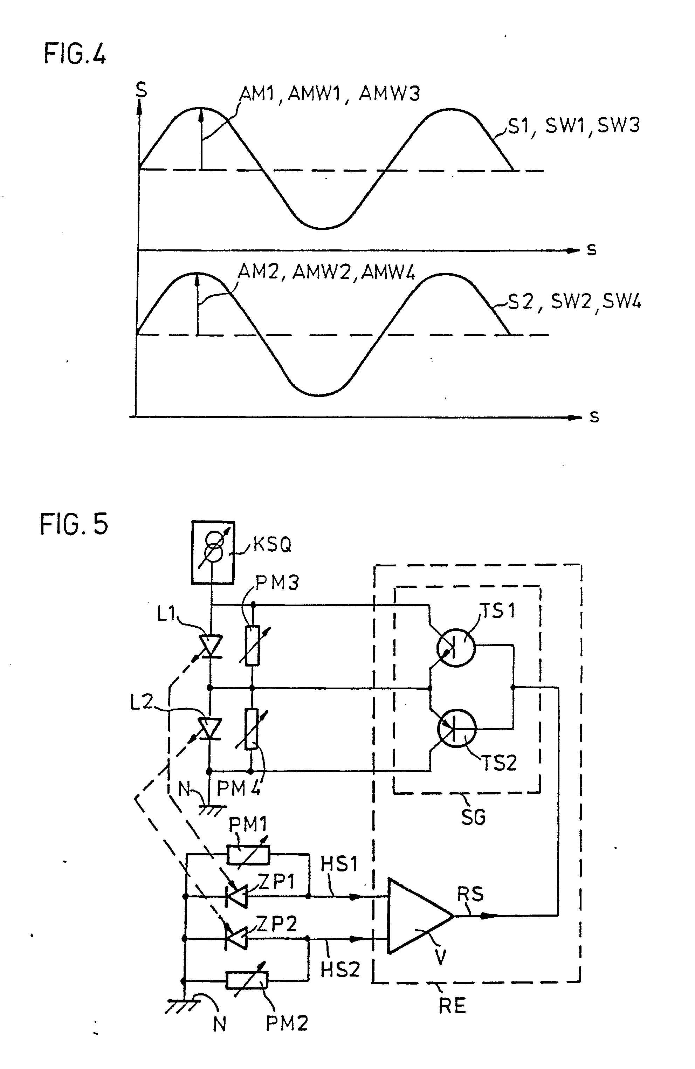

In Figur 1 ist eine lichtelektrische Längenmeßeinrichtung in einer schematischen Seitenansicht dargestellt, bei der die Teilung T einer mit einem nicht gezeigten ersten Objekt verbundenen Maßverkörperung M in Form eines Maßstabes von einer mit einem nicht gezeigten zweiten Objekt verbundenen Abtasteinrichtung A abgetastet wird, die zwei in einem bestimmten konstanten Abstand C in Meßrichtung X voneinander angeordnete Abtasteinheiten AE1, AE2 enthält. In Figur 2 sind die erste Abtasteinheit AE1 in einem schematischen Querschnitt gemäß dem Schnitt 2-2 der Figur 1 und in Figur 3 die zweite Abtasteinheit AE2 in einem schematischen Querschnitt gemäß dem Schnitt 3-3 der Figur 1 dargestellt. Die beiden nicht gezeigten Objekte, deren gegenseitige Relativlage gemessen werden soll, können durch das Bett und den Schlitten einer nicht dargestellten Bearbeitungsmaschine gebildet sein.

Die erste Abtasteinheit AE1 weist eine erste Beleuchtungseinheit B1 mit einer ersten Lichtquelle L1 und einem ersten Kondensor K1, eine erste Abtastplatte AP1 mit einer ersten Abtastteilung AT1 sowie ein der ersten Abtastteilung AT1 zugeordnetes erstes Photoelement P1 auf; die zweite Abtasteinheit AE2 weist eine zweite Beleuchtungseinheit B2 mit einer zweiten Lichtquelle L2 und einem zweiten Kondensor K2, eine zweite Abtastplatte AP2 mit einer zweiten Abtastteilung AT2 sowie ein der zweiten Abtastteilung AT2 zugeordnetes zweites Photoelement P2 auf. Die beiden Lichtquellen L1,L2 in Form von Miniaturwendellampen der beiden Abtasteinheiten AE1, AE2 sind in Reihe zwischen einer Spannungsquelle SQ und Masse N geschaltet und die beiden Photoelemente P1,P2 mit jeweils einem Pol mit Masse N verbunden.

Bei der Relativbewegung der Abtasteinrichtung A mit den beiden separaten Abtasteinheiten AE1, AE2 bezüglich des Maßstabs M in Meßrichtung X werden die beiden von den zwei Lichtquellen L1,L2 der Beleuchtungseinheiten B1,B2 ausgehenden jeweiligen Lichtströme durch die Teilung T des Maßstabs M und durch die beiden Abtastteilungen AT1, AT2 der beiden Abtastplatten AP1,AP2 moduliert und fallen auf die beiden zugehörigen Photoelemente P1,P2, die zwei periodische Abtastsignale S1,S2 erzeugen, die in analoger Form einander additiv überlagert und einer Auswerteeinrichtung AWE mit einer Impulsformerstufe F und einem Vorwärts-/Rückwärtszähler Z zugeführt werden, der die Längenmeßwerte in digitaler Form anzeigt.

Den beiden Photoelementen P1,P2 der beiden Abtasteinheiten AE1, AE2 können in bekannter, nicht dargestellter Weise jeweils drei weitere Photoelemente zugeordnet werden, so daß von den beiden Abtasteinheiten jeweils vier periodische Abtastsignale mit einem bestimmten gegenseitigen Phasenversatz zur Diskriminierung der Meßrichtung und zur Eliminierung der Gleichspannungsanteile der periodischen Abtastsignale geliefert werden. Da diese Maßnahmen, die beispielsweise in der DE-PS 30 07 311 beschrieben sind, nicht die Erfindung berühren, wurde auf deren Darstellung aus Gründen einer besseren Übersichtlichkeit verzichtet.

Durch die additive Überlagerung der beiden periodischen Abtastsignale S1,S2 der beiden Abtasteinheiten AE1,AE2 in analoger Form ergibt sich eine höhere Meßgenauigkeit, da durch die beiden Abtasteinheiten AE1,AE2 ein doppelt so großer Bereich der Teilung T des Maßstabs M abgetastet wird, so daß eventuelle Ungenauigkeiten der Teilung T eliminiert werden.

Für diese additive Überlagerung der beiden periodischen Abtastsignale S1,S2 in analoger Form ist es aber erforderlich, daß die maximalen Amplituden AM1, AM2 der beiden periodischen Abtastsignale S1,S2 ein bestimmtes vorgegebenes Betragsverhältnis, vorzugsweise ein Betragsverhältnis von 1:1 aufweisen, das heißt, daß die Beträge der maximalen Amplituden AM1, AM2 der beiden periodischen Abtastsignale S1,S2 einander gleich sind; in Figur 4 sind die beiden periodischen Abtastsignale S1,S2 mit ihren maximalen Amplituden AM1,AM2 in Abhängigkeit vom Meßweg s dargestellt.

Diese Bedingung des bestimmten vorgegebenen Betragsverhältnisses zwischen den maximalen Amplituden AM1, AM2 der beiden periodischen Abtastsignale S1,S2 der beiden Photoelemente P1,P2 muß aber über die gesamte Betriebsdauer bzw. Lebensdauer der beiden Lichtquellen L1,L2 der beiden Abtasteinheiten AE1, AE2 sichergestellt sein. Derartige handelsübliche Lichtquellen L1,L2 der beiden Beleuchtungseinheiten B1,B2 bei lichtelektrischen Meßeinrichtungen weisen im allgemeinen jedoch eine unterschiedliche Alterungscharakteristik auf, die zu einer Abweichung vom vorgegebenen Betragsverhältnis zwischen den maximalen Amplituden AM1,AM2 der beiden periodischen Abtastsignale S1,S2 und damit zu Meßungenauigkeiten führen kann.

Zur Konstanthaltung dieses bestimmten vorgegebenen Betragsverhältnisses von 1:1, bei dem die Beträge der maximalen Amplituden AM1,AM2 der beiden periodischen Abtastsignale S1,S2 der beiden Photoelemente P1,P2 der beiden Abtasteinheiten AE1,AE2 einander gleich sind, werden dem ersten Photoelement P1 der ersten Abtasteinheit AE1 ein erstes zusätzliches Photoelement ZP1, das von der ersten Lichtquelle L1 der ersten Beleuchtungseinheit B1 durch den transparenten Maßstab M außerhalb der Teilung T und durch die erste transparente Abtastplatte AP1 außerhalb der Abtastteilung AT1 mit ummoduliertem Licht (Gleichlicht) bei der Meßbewegung der Abtasteinrichtung A bezüglich des Maßstabs M beaufschlagt wird, und dem zweiten Photoelement P2 der zweiten Abtasteinheit AE2 ein zweites zusätzliches Photoelement ZP2 zugeordnet, das von der zweiten Lichtquelle L2 der zweiten Beleuchtungseinheit B2 durch den transparenten Maßstab M außerhalb der Teilung T und durch die zweite transparente Abtastplatte AP2 außerhalb der zweiten Abtastteilung AT2 mit ummoduliertem Licht (Gleichlicht) bei der Meßbewegung der Abtasteinrichtung A bezüglich des Maßstabs M beaufschlagt wird.

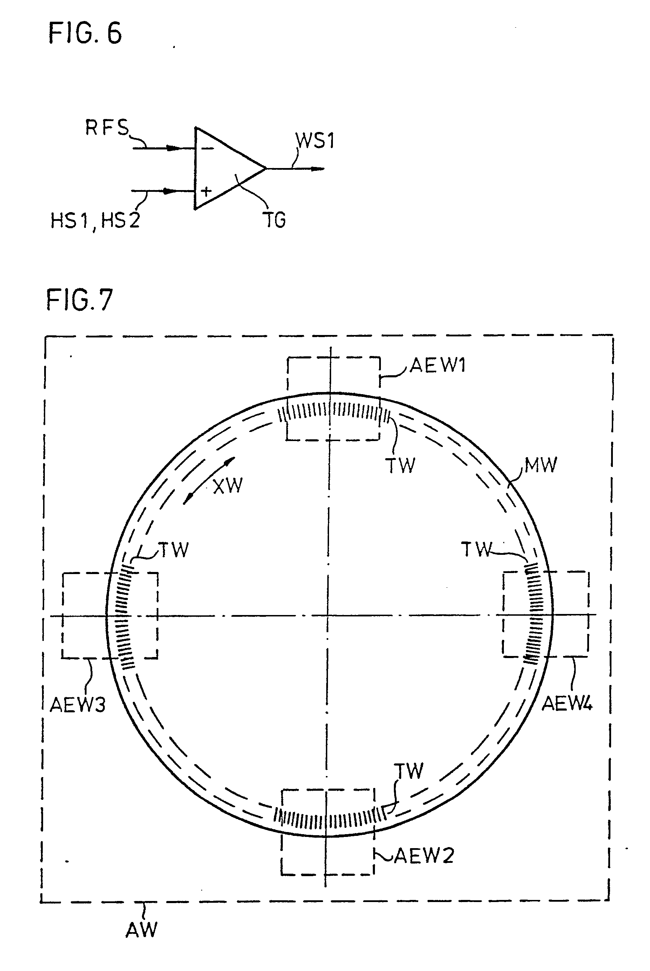

In Figur 5 ist eine erste Regelschaltung mit den beiden Lichtquellen L1,L2 in Form von lichtemittierenden Dioden der beiden Abtasteinheiten AE1,AE2 sowie mit den den beiden Photoelementen P1,P2 zugeordneten zusätzlichen Photoelementen ZP1,ZP2 dargestellt. Die beiden Lichtquellen L1,L2 sind in Reihe zwischen einer regelbaren Konstantstromquelle KSQ und Masse N geschaltet. Das erste zusätzliche Photoelement ZP1 ist mit der Kathode mit Masse N und mit der Anode mit dem invertierenden Eingang eines Vergleichers V mit einer Verstärkung größer Null einer Regeleinheit RE verbunden; das zweite zusätzliche Photoelement ZP2 ist mit der Kathode mit Masse N und mit der Anode mit dem nichtinvertierenden Eingang des Vergleichers V verbunden. Dem ersten zusätzlichen Photoelement ZP1 sind ein erstes Potentiometer PM1 und dem zweiten zusätzlichen Photoelement ZP2 ein zweites Potentiometer PM2 als regelbare Arbeitswiderstände parallel zugeordnet. Der Ausgang des Vergleichers V ist in der Regeleinheit RE mit einem Stellglied SG für die beiden Lichtquellen L1, L2 verbunden, die einen ersten NPN-Transistor TS1 und einen zweiten PNP-Transistor TS2 aufweist. Der erste Transistor TS1 ist mit dem Kollektor mit der Anode der ersten Lichtquelle L1 und mit dem Emitter mit der Kathode der ersten Lichtquelle L1 verbunden; gleichfalls ist der zweite Transistor TS2 mit dem Kollektor über Masse N mit der Kathode und mit dem Emitter mit der Anode der zweiten Lichtquelle L2 verbunden. Der ersten Lichtquelle L1 sind ein drittes Potentiometer PM3 und der zweiten Lichtquelle L2 ein viertes Potentiometer PM4 parallel geschaltet.

Bei der anfänglichen Inbetriebnahme der Meßeinrichtung werden die beiden in Reihe geschalteten Lichtquellen L1,L2 mittels der regelbaren Konstantstromquelle KSQ auf maximale Helligkeit eingestellt und mit dem dritten Potentiometer PM3 und dem vierten Potentiometer PM4 auf gleiche Helligkeit eingeregelt, so daß die beiden maximalen Amplituden AM1,AM2 der beiden Abtastsignale S1,S2 der beiden, von den modulierten Lichtströmen gleicher Helligkeit der beiden Lichtquellen L1,L2 beaufschlagten Photoelemente P1,P2 der beiden Abtasteinheiten AE1,AE2 einander gleich sind, was mittels eines Oszillographen überprüft werden kann. Gleichzeitig werden die beiden zusätzlichen Photoelemente ZP1,ZP2 von den unmodulierten Lichtströmen gleicher Helligkeit der beiden Lichtquellen L1,L2 beaufschlagt; die beiden zusätzlichen Photoelemente ZP1, ZP2 liefern somit zwei Helligkeitssignale HS1,HS2, deren Gleichheit mittels des ersten und zweiten Potentiometers PM1,PM2 eingestellt wird. Wegen der Gleichheit zwischen dem ersten Helligkeitssignal HS1 des ersten zusätzlichen Photoelements ZP1 und dem zweiten Helligkeitssignal HS2 des zweiten zusätzlichen Photoelements ZP2 besitzt das Regelsignal RS am Ausgang des Vergleichers V den Wert Null.

Mit zunehmender Betriebsdauer bzw. Lebensdauer der beiden Lichtquellen L1,L2 beispielsweise in Form von lichtemittierenden Dioden oder von Miniaturwendellampen werden wegen der im allgemeinen bei derartigen handelsüblichen Lichtquellen L1,L2 unterschiedlichen Alterungscharakteristik die Helligkeiten der beiden Lichtströme der beiden Lichtquellen L1,L2 unterschiedlich abnehmen, so daß zwischen den beiden Helligkeitssignalen HS1, HS2 der beiden zusätzlichen Photoelemente ZP1, ZP2 eine Differenz auftritt, die zu einem endlichen positiven oder negativen Regelsignal RS,je nach dem Vorzeichen der Differenz, am Ausgang des Vergleichers V führt. Dieses Regelsignal RS des Vergleichers V wird dem Stellglied SG für die beiden Lichtquellen L1,L2 zugeführt und bewirkt, daß die Helligkeit der helleren Lichtquelle L1,L2 auf die Helligkeit der dunkleren Lichtquelle L1,L2 abgesenkt wird, so daß bei der erneuten Gleichheit zwischen den Helligkeiten der beiden Lichtströme der beiden Lichtquellen L1,L2 keine Differenz zwischen den beiden Helligkeitssignalen HS1,HS2 der beiden zusätzlichen Photoelemente ZP1,ZP2 mehr auftritt und das Regelsignal RS am Ausgang des Vergleichers V wieder den Wert Null annimmt. Durch diese permanente Regelung der Helligkeiten der beiden Lichtquellen L1,L2 auf Gleichheit besitzen die beiden periodischen Abtastsignale S1,S2 der beiden Abtasteinheiten AE1,AE2 die gleichen maximalen Amplituden AM1,AM2, so daß durch die additive Überlagerung der beiden periodischen Abtastsignale S1,S2 in analoger Form sich bei der Längenmeßeinrichtung die Meßgenauigkeit erhöht, da durch die beiden Abtasteinheiten AE1,AE2 gleichzeitig ein doppelt so großer Bereich der Teilung T des Maßstabs M abgetastet wird, so daß eventuelle partielle Ungenauigkeiten der Teilung T unwirksam bleiben und nicht die Meßgenauigkeit beeinträchtigen.

In Figur 6 ist eine erste Überwachungsschaltung gezeigt, mit der die Helligkeiten der beiden Lichtquellen L1,L2 auf Unterschreitung eines bestimmten Helligkeitsminimums überwacht werden, das zur Erzeugung für die korrekte Längenmessung noch geeigneter maximaler Amplituden AM1, AM2 der beiden Abtastsignale S1,S2 erforderlich ist. Dieses erforderliche Helligkeitsminimum wird durch ein bestimmtes absolutes Referenzsignal RFS vorgegeben, das dem invertierenden Eingang eines Triggers TG zugeführt wird, dessen nichtinvertierender Eingang mit dem ersten Helligkeitssignal HS1 des ersten zusätzlichen Photoelements ZP1 oder mit dem zweiten Helligkeitssignal HS2 des zweiten zusätzlichen Photoelements ZP2 beaufschlagt wird. Wenn das erste Helligkeitssignal HS1 oder das zweite Helligkeitssignal HS2 das absolute Referenzsignal RFS unterschreiten, erscheint am Ausgang des Triggers TG ein Warnsignal WS, das einer nicht gezeigten bekannten Warneinrichtung mit einer optischen oder akustischen Fehleranzeige zugeführt wird.

In Figur 7 ist eine Winkelmeßeinrichtung in einer schematischen Draufsicht dargestellt, bei der eine Winkelteilung TW einer Maßverkörperung MW in Form einer Teilscheibe von einer Abtasteinrichtung AW mit einem ersten Paar von zwei sich diametral gegenüberliegenden, um 180° gegeneinander in Meßrichtung XW beabstandeten Abtasteinheiten AEW1,AEW2 und mit einem zweiten Paar von zwei sich diametral gegenüberliegenden, um 180° gegeneinander in Meßrichtung XW beabstandeten Abtasteinheiten AEW3,AEW4 abgetastet wird. Die erste Abtasteinheit AEW1 und die zweite Abtasteinheit AEW2 des ersten Paares sind gegenüber der dritten Abtasteinheit AEW3 und der vierten Abtasteinheit AEW4 des zweiten Paares um 90° versetzt. Diese vier Abtasteinheiten AEW1-AEW4 weisen analog zu den beiden Abtasteinheiten AE1,AE2 der Figuren 1-3 die gleichen Elemente auf, die dementsprechend auch die gleichen Bezugszeichen unter Hinzufügung des Buchstabens W aufweisen.

Die erste Regelschaltung nach Figur 5 mit den entsprechenden gleichen Elementen dient gleichfalls zur Regelung der Gleichheit der Helligkeiten der beiden Lichtquellen LW1, LW2 des ersten Paares der beiden Abtasteinheiten AEW1,AEW2 und damit der Gleichheit der maximalen Amplituden AMW1, AMW2 der beiden periodischen Abtastsignale SW1,SW2 (Figur 4) der beiden Abtasteinheiten AEW1,AEW2 des ersten Paares.

Die erste Regelschaltung nach Figur 5 mit den entsprechenden gleichen Elementen dient ebenso zur Regelung der Gleichheit der Helligkeiten der beiden Lichtquellen LW3,LW4 des zweiten Paares der beiden Abtasteinheiten AEW3,AEW4 und damit der Gleichheit der maximalen Amplituden AMW3,AMW4 der beiden periodischen Abtastsignale SW3,SW4 (Figur 4) der beiden Abtasteinheiten AEW3,AEW4 des zweiten Paares.

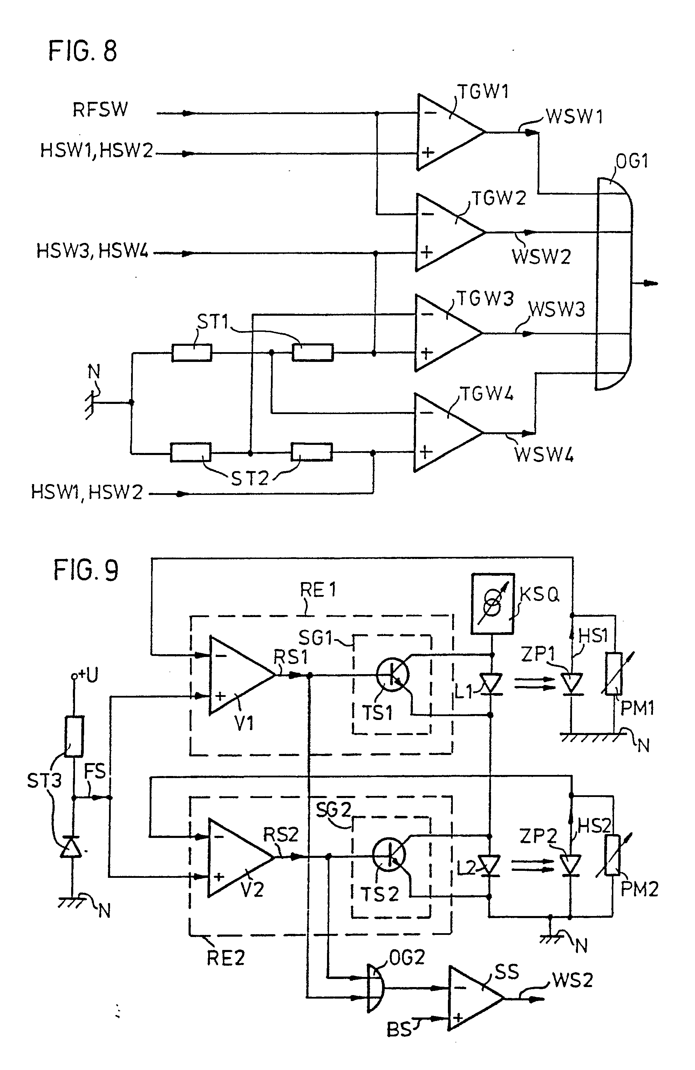

In Figur 8 ist eine zweite Überwachungsschaltung gezeigt, mit der die Helligkeiten der ersten Lichtquelle LW1 der ersten Abtasteinheit AEW1 und der zweiten Lichtquelle LW2 der zweiten Abtasteinheit AEW2 des ersten Paares sowie die Helligkeiten der dritten Lichtquelle LW3 der dritten Abtasteinheit AEW3 und der vierten Lichtquelle LW4 der vierten Abtasteinheit AEW4 des zweiten Paares nach Figur 7 auf Unterschreitung eines bestimmten Helligkeitsminimums überwacht werden, das zur Erzeugung noch für die Winkelmessung geeigneter maximaler Amplituden AMW1,AMW2,AMW3,AMW4 der vier Abtastsignale SW1,SW2, SW3,SW4 der vier Abtasteinheiten AEW1,AEW2,AEW3, AEW4 erforderlich ist. Dieses erforderliche Helligkeitsminimum wird durch ein bestimmtes absolutes Referenzsignal RFSW vorgegeben, das dem invertierenden Eingang eines ersten Triggers TGW1 und dem invertierenden Eingang eines zweiten Triggers TGW2 zugeführt wird. Das erste Helligkeitssignal HSW1 des ersten zusätzlichen Photoelements ZPW1 oder das zweite Helligkeitssignal HSW2 des zweiten zusätzlichen Photoelements ZPW2 beaufschlagen den nichtinvertierenden Eingang des ersten Triggers TGW1 und das dritte Helligkeitssignal HSW3 des dritten zusätzlichen Photoelements ZPW3 oder das vierte Helligkeitssignal HSW4 des vierten zusätzlichen Photoelements ZPW4 den nichtinvertierenden Eingang des zweiten Triggers TGW2. Wenn das erste Helligkeitssignal HSW1 oder das zweite Helligkeitssignal HSW2 das absolute Referenzsignal RFSW unterschreiten, erscheint am Ausgang des ersten Triggers TGW1 ein erstes Warnsignal WSW1; desgleichen erscheint am Ausgang des zweiten Triggers TGW2 ein zweites Warnsignal WSW2, wenn das dritte Helligkeitssignal HSW3 oder das vierte Helligkeitssignal HSW4 das absolute Referenzsignal RFSW unterschreiten.

Neben dieser Absolutwertüberwachung der Helligkeiten der vier Lichtquellen LW1-LW4 der vier Abtasteinheiten AEW1-AEW4 der Abtasteinrichtung AW der Winkelmeßeinrichtung erlaubt die Überwachungsschaltung nach Figur 8 auch die Überwachung eines für die korrekte Winkelmessung noch zulässigen maximalen relativen Unterschieds zwischen den Helligkeiten der beiden Lichtquellen LW1,LW2 der beiden Abtasteinheiten AEW1,AEW2 des ersten Paares und den Helligkeiten der beiden Lichtquellen LW3,LW4 der beiden Abtasteinheiten AEW3,AEW4 des zweiten Paares.

Zu diesem Zweck werden das dritte Helligkeitssignal HSW3 des dritten zusätzlichen Photoelements ZPW3 oder das vierte Helligkeitssignal HSW4 des vierten zusätzlichen Photoelements ZPW4 einmal dem nichtinvertierenden Eingang des dritten Triggers TGW3 und zum anderen über einen ersten Spannungsteiler ST1 dem invertierenden Eingang des vierten Triggers TGW4 und das erste Helligkeitssignal HSW1 des ersten zusätzlichen Photoelements ZPW1 oder das zweite Helligkeitssignal HSW2 des zweiten zusätzlichen Photoelements ZPW2 einmal dem nichtinvertierenden Eingang des vierten Triggers TGW4 und zum anderen über einen zweiten Spannungsteiler ST2 dem invertierenden Eingang des dritten Triggers TGW3 zugeführt; die beiden an Masse N angeschlossenen Spannungsteiler ST1,ST2 legen den maximal zulässigen relativen Unterschied zwischen den Helligkeiten des ersten Paares der beiden Lichtquellen LW1, LW2 und des zweiten Paares der beiden Lichtquellen LW3,LW4 fest.

Bei Unterschreitung dieses zulässigen maximalen relativen Unterschieds erscheinen je nach dem Vorzeichen der Differenz zwischen dem ersten Helligkeitssignal HSW1 oder dem zweiten Helligkeitssignal HSW2 und dem dritten Helligkeitssignal HSW3 oder dem vierten Helligkeitssignal HSW4 entweder am Ausgang des dritten Triggers TGW3 ein drittes Warnsignal WSW3 oder am Ausgang des vierten Triggers TGW4 ein viertes Warnsignal WSW4. Die vier Warnsignale WSW1-WSW4 der vier Trigger TGW1-TGW4 werden über ein erstes Odergatter OG1 einer nicht gezeigten bekannten Warneinrichtung mit einer akustischen oder optischen Fehleranzeige zugeleitet.

Die additive Überlagerung der beiden Abtastsignale SW1,SW2 des ersten Paares der Abtasteinheiten AEW1,AEW2 mit gleichen maximalen Amplituden AMW1,AMW2 in analoger Form erlaubt zusätzlich zur Elimination von Teilungsfehlern der Winkelteilung TW der Teilscheibe MW der Winkelmeßeinrichtung noch die Eliminierung von Exzentrizitätsfehlern der Lagerung der Teilscheibe MW. Die additive Überlagerung der beiden Abtastsignale SW3,SW4 des zweiten Paares der Abtasteinheiten AEW3,AEW4 mit gleichen maximalen Amplituden AMW3,AMW4 in analoger Form gestattet ferner die Eliminierung des sogenannten $2\phi$-Fehlers (Verbiegungsfehler oder Sattelfehler) der Teilscheibe MW der Winkelmeßeinrichtung.

In Figur 9 ist eine zweite Regelschaltung dargestellt, mit der die Helligkeiten der ersten Lichtquelle L1 der ersten Abtasteinheit AE1 und der zweiten Lichtquelle L2 der zweiten Abtasteinheit AE2 der Abtasteinrichtung A der Längenmeßeinrichtung gemäß den Figuren 1-3 auf Gleichheit geregelt werden; mit diesen Figuren identische Elemente weisen das gleiche Bezugszeichen auf. Die erste Lichtquelle L1 der ersten Abtasteinheit AE1 und die zweite Lichtquelle L2 der zweiten Abtasteinheit AE2 sind in Reihe zwischen der Konstantstromquelle KSQ und Masse N geschaltet. Das dem ersten Photoelement P1 der ersten Abtasteinheit AE1 zugeordnete erste zusätzliche Photoelement ZP1 ist mit seiner Kathode mit Masse N und mit seiner Anode mit dem invertierenden Eingang eines ersten Vergleichers V1 einer ersten Regeleinheit RE1 verbunden. Ein erstes Regelsignal RS1 am Ausgang des ersten Vergleichers V1 beaufschlagt ein erstes Stellglied SG1 der ersten Regeleinheit RE1 in Form eines Nebenschlußreglers mit einem ersten Transistor TS1, dessen Kollektor mit der Anode der ersten Lichtquelle L1 und dessen Emitter mit der Kathode der ersten Lichtquelle L1 verbunden sind. Das dem zweiten Photoelement P2 der zweiten Abtasteinheit AE2 zugeordnete zweite zusätzliche Photoelement ZP2 ist mit seiner Kathode mit Masse N und mit seiner Anode mit dem invertierenden Eingang eines zweiten Vergleichers V2 einer zweiten Regeleinheit RE2 verbunden. Ein zweites Regelsignal RS2 am Ausgang des zweiten Vergleichers V2 beaufschlagt ein zweites Stellglied SG2 der zweiten Regeleinheit RE2 in Form eines Nebenschlußreglers mit einem zweiten Transistor TS2, dessen Kollektor mit der Anode der zweiten Lichtquelle L2 und dessen Emitter mit der Kathode der zweiten Lichtquelle L2 verbunden sind. Der nichtinvertierende Eingang des ersten Vergleichers V1 und der nichtinvertierende Eingang des zweiten Vergleichers V2 werden von einem vorgegebenen konstanten Führungssignal FS beaufschlagt, dessen konstanter Spannungswert mit einem dritten Spannungsteiler ST3 eingestellt wird, der aus einem Widerstand und aus einer Zenerdiode besteht und zwischen einer Versorgungsspannung U und Masse N geschaltet ist. Das erste Regelsignal RS1 des ersten Vergleichers V1 und das zweite Regelsignal RS2 des zweiten Vergleichers V2 werden zusätzlich über ein zweites Odergatter OG2 dem invertierenden Eingang einer Schaltstufe SS zugeführt, dessen nichtinvertierender Eingang von einem Bezugssignal BS beaufschlagt ist. An das erste zusätzliche Photoelement ZP1 sind ein erstes Potentiometer PM1 und an das zweite zusätzliche Photoelement ZP2 ein zweites Potentiometer PM2 angeschaltet.

Bei der anfänglichen Inbetriebnahme der Längenmeßeinrichtung werden die Konstantstromquelle KSQ auf maximale Stromabgabe eingeregelt und das Führungssignal FS mit einem derartigen konstanten Spannungswert vorgegeben, daß die beiden Regelsignale RS1,RS2 der beiden Vergleicher V1,V2 die beiden als Nebenschlußregler wirkenden Stellglieder SG1,SG2 derart aufsteuern, daß die gleichen Helligkeiten der beiden Lichtquellen L1,L2 einen Helligkeitsgrad aufweisen, der etwa in der Mitte zwischen der maximalen Helligkeit und der für die Messung noch zulässigen minimalen Helligkeit liegt. Das erste Helligkeitssignal HS1 des ersten zusätzlichen Photoelements ZP1 und das zweite Helligkeitssignal HS2 des zweiten zusätzlichen Photoelements ZP2 aufgrund der Beleuchtung durch die beiden Lichtquellen L1,L2 mit unmoduliertem Licht werden mittels des ersten Potentiometers PM1 und mittels des zweiten Potentiometers PM2 auf Gleichheit eingestellt und beaufschlagen die invertierenden Eingänge der beiden Vergleicher V1,V2, so daß auch die maximalen Amplituden AM1,AM2 des ersten Photoelements P1 und des zweiten Photoelements P2 einander gleich sind, was mit einem Oszillographen überprüft werden kann.

Die erste Regeleinheit RE1 und die zweite Regeleinheit RE2 regeln die Helligkeiten der ersten Lichtquelle L1 und der zweiten Lichtquelle L2 unabhängig voneinander aufgrund des vorgegebenen konstanten Führungssignals FS auch bei unterschiedlichen Helligkeitsabnahmen im Laufe ihrer Betriebsdauer bzw. Lebensdauer infolge einer unterschiedlichen Alterungscharakteristik auf Gleichheit, indem die beiden Regelsignale RS1,RS2 der beiden Vergleicher V1,V2 aufgrund der beiden Helligkeitssignale HS1,HS2 der beiden zusätzlichen Photoelemente ZP1,ZP2 die beiden Stellglieder SG1,SG2 herunterregeln. Bei einem bestimmten Minimalwert der beiden Regelsignale RS1,RS2, der durch das Bezugssignal BS vorgegeben ist, gibt die Schaltstufe SS, die von den beiden Regelsignalen RS1,RS2 über das zweite Odergatter OG2 beaufschlagt ist, an ihrem Ausgang ein zweites Warnsignal WS2 zur Kenntlichmachung des Endes des Stellbereiches eines der beiden Stellglieder SG1,SG2 ab.

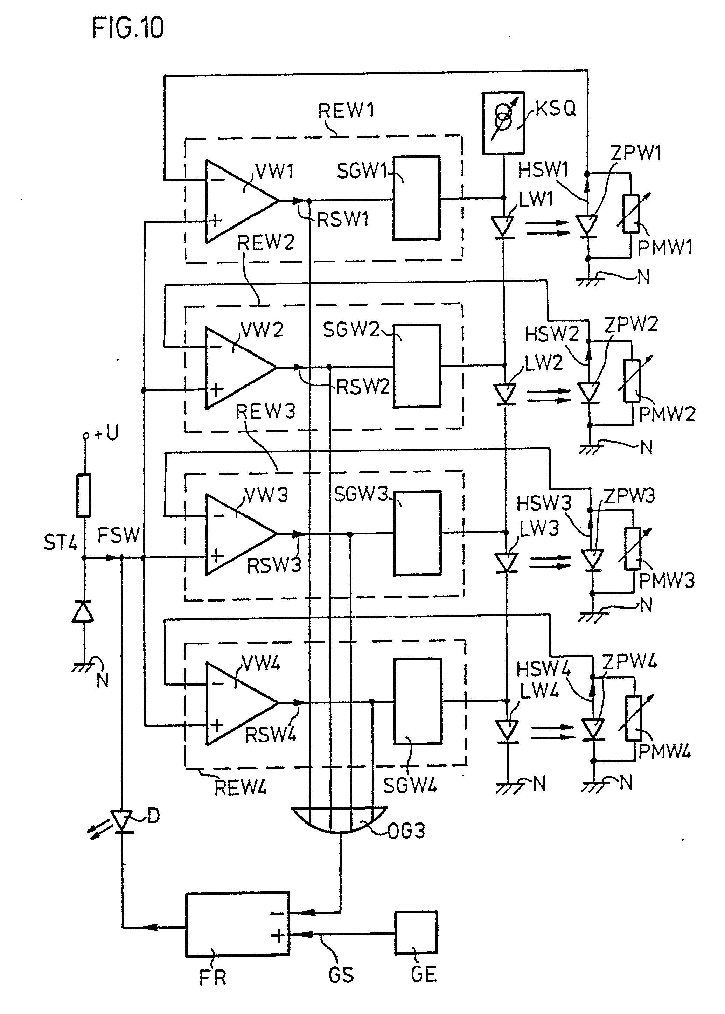

In Figur 10 ist eine dritte Regelschaltung dargestellt, mit der die Helligkeiten der ersten Lichtquelle LW1 und der zweiten Lichtquelle LW2 des ersten Paares sowie die dritte Lichtquelle LW3 und die vierte Lichtquelle LW4 des zweiten Paares der vier Abtasteinheiten AEW1-AEW4 der Abtasteinrichtung AW der Winkelmeßeinrichtung gemäß Figur 7 unabhängig voneinander aufgrund des vorgegebenen konstanten Führungssignals FSW jeweils auf Gleichheit auch bei unterschiedlichen Helligkeitsabnahmen im Laufe ihrer Betriebsdauer bzw. Lebensdauer infolge einer unterschiedlichen Alterungscharakteristik geregelt werden. Diese dritte Regelschaltung weist vier Regeleinheiten REW1-REW4 mit vier Vergleichern VW1-VW4 und vier Stellgliedern SGW1-SGW4 für die vier Lichtquellen LW1-LW4 auf; den vier zusätzlichen Photoelementen ZPW1-ZPW4 sind vier Potentiometer PMW1-PMW4 zugeordnet. Die vier Helligkeitssignale HSW1-HSW4 der vier zusätzlichen Photoelemente ZPW1-ZPW4 werden den vier invertierenden Eingängen der vier Vergleicher VW1-VW4 zugeführt, deren nichtinvertierende Eingänge gemeinsam vom vorgegebenen konstanten Führungssignal FSW beaufschlagt sind. Bezüglich der vorgenannten Elemente weist diese dritte Regelschaltung die gleiche Funktionsweise wie die zweite Regelschaltung gemäß Figur 9 auf.

Im Unterschied zur zweiten Regelschaltung nach Figur 9 werden bei dieser dritten Regelschaltung die vier Regelsignale RSW1-RSW4 über ein drittes Odergatter OG3 einem Führungssignalregler FR zugeführt, der den vorgegebenen konstanten Spannungswert des Führungssignals FSW auf einen reduzierten konstanten Spannungswert absenkt, sobald eines der vier Stellglieder SGW1-SGW4 am Ende seines Stellbereiches angelangt ist, um die vier Lichtquellen LW1-LW4 in ihrer Lebensdauer besonders gut ausnutzen zu können. Durch die Vorgabe des reduzierten konstanten Führungssignals FSW werden die vier Lichtquellen LW1-LW4 auf eine gleiche reduzierte Helligkeit abgesenkt, die noch im zulässigen Bereich für eine zuverlässige Messung liegt, so daß die vier Stellglieder SGW1-SGW4 wieder über ihren ursprünglichen Stellbereich verfügen.

Zu diesem Zweck wird der positive Eingang des Führungssignalreglers FR mit einem vorgegebenen Grenzwertsignal GS einer Grenzwerteinheit GE beaufschlagt und ist der negative Eingang des Führungssignalreglers FR mit dem dritten Odergatter OG3 verbunden; der Ausgang des Führungssignalreglers FR ist über eine lichtemittierende Diode D an einem vierten Spannungsteiler ST4 zur Erzeugung des Führungssignals FSW angeschlossen. Wenn die Regelsignale RSW1-RSW4 der vier Vergleicher VW1-VW4 unterhalb des Grenzwertsignals GS der Grenzwerteinheit GE liegen, gelangt das positive Ausgangssignal des Führungssignalreglers FR infolge der in Sperrichtung geschalteten Diode D nicht zum vierten Spannungsteiler ST4, so daß das ursprünglich vorgegebene Führungssignal FSW gültig bleibt. Übersteigt dagegen eines der vier Regelsignale RSW1-RSW4 das Grenzwertsignal GS, so reduziert das negative Ausgangssignal des Führungssignalreglers FR über die nun in Durchlaßrichtung arbeitende Diode D das Führungssignal FSW auf den reduzierten konstanten Spannungswert; gleichzeitig leuchtet die Diode D zur Anzeige der reduzierten Helligkeit der vier Lichtquellen LW1-LW4 auf. Das jeweilige Ende der Lebensdauer der vier Lichtquellen LW1-LW4 kann durch eine nicht gezeigte Warnanzeige gemeldet werden, beispielsweise durch die Schaltstufe SS der Figur 9.

**Ansprüche**

1. Lichtelektrische Längen- oder Winkelmeßeinrichtung zur Messung der Relativlage zweier zueinander beweglicher Objekte, mit mehreren in Meßrichtung voneinander beabstandeten und mit einem der Objekte zu verbindenden Abtasteinheiten (AE, AEW) mit jeweils einer eigenen Lichtquelle (L, LW) zur Abtastung einer Teilung (T) einer mit dem anderen Objekt zu verbindenden Maßverkörperung (M) und mit einer Vorrichtung (AWE) zur additiven Überlagerung und anschließenden Auswertung der von den Abtasteinheiten (AE, AEW) erzeugten Abtastsignale (S, SW) dadurch gekennzeichnet, daß die Abtasteinheiten (AE, AEW) zur konstanthaltung eines vorgegebenen Betragsverhältnisses der maximalen Amplituden (AM, AMW) der beiden Abtastsignale (S, SW) jeweils ein zusätzliches Photoelement (ZP, ZPW) zur Erzeugung eines der Helligkeit der Lichtquelle (L, LW) proportionalen Helligkeitssignales (HS, HSW) aufweisen und mit einer Regeleinheit (RE, REW) zur Regelung und zur Überwachung der Helligkeiten der Lichtquellen (L, LW) Verbunden sind, wobei die Regeleinheit (RE, REW) zur Überwachung der Helligkeiten der Lichtquellen (L, LW) wenigstens eines der Helligkeitssignale (HS, HSW) auf Unterschreitung eines bestimmten Helligkeitsminimums mit einem vorgegebenen Referenzsignal (RFS, RFSW) vergleicht und/oder bei wenigstens zwei Paaren von Helligkeitssignalen (HSW) den relative Unterschied zwischen zwei Paaren von Helligkeitssignalen (HSW) mit einem bestimmten, durch Spannungsteilung erzeugten Teil eines dieser Helligkeitssignale (HSW) vergleicht.

2. Lichtelektrische Längen- oder Winkelmeßeinrichtung zur Messung der Relativlage zweier zueinander beweglicher Objekte, mit mehreren in Meßrichtung voneinander beabstandeten und mit einem der Objekte zu verbindenden Abtasteinheiten (AE, AEW) mit jeweils einer eigenen Lichtquelle (L, LW) zur Abtastung einer Teilung (T) einer mit dem anderen Objekt zu verbindenden Maßverkörperung (M) und mit einer Vorrichtung (AWE) zur additiven Überlagerung und anschließenden Auswertung der von den Abtasteinheiten (AE, AEW) erzeugten Abtastsignale (S, SW) dadurch gekennzeichnet, daß jede Abtasteinheit (AE, AEW) zur Konstanthaltung eines vorgegebenen Betragsverhältnisses der maximalen Amplituden (AM, AMW) der Abtastsignale (S, SW) ein zusätzliches Photoelement (ZP, ZPW) zur Erzeugung eines der Helligkeit der Lichtquelle (L, LW) proportionalen Helligkeitssignals (HS, HSW) aufweist und mit einer Regeleinheit (RE, REW) zur Regelung der Helligkeit der zugehörigen Lichtquelle (L, LW) Verbunden ist, wobei jede Regeleinheit (RE, REW) mit einer Vorrichtung zu Erzeugung eines gemeinsamen vorgegebenen Führungssignals (FS, FSW) und zu ihrer Überwachung mit einer Vorrichtung (ss) zum Vergleich der Regelsignale (RS, RSW) der Regeleinheiten (RE, REW) mit einem vorgegebenen Bezugssignal (BS) verbunden ist.

3. Meßeinrichtung nach Anspruch 2, dadurch gekennzeichnet, daß das Führungssignal (FSW) von einem Führungssignalregler (FR) regelbar ist.

4. Meßeinrichtung nach den Ansprüchen 3, dadurch gekennzeichnet, daß am Eingang des Führungssignalreglers (FR) Regelsignale (RSW) der Regeleinheiten (REW) anliegen.

5. Meßeinrichtung nach Anspruch 4, dadurch gekennzeichnet, daß am Eingang des Führungssignalreglers (FR) zusätzlich ein vorgegebenes Grenzwertsignal (GS) einer Grenzwerteinheit (GE) anliegt.

6. Meßeinrichtung nach den Ansprüchen 1 und 2, dadurch gekennzeichnet, daß die Regeleinheit (RE, REW) einen Vergleicher (V, VW) und ein Stellglied (SG, SGW) aufweist.

7. Meßeinrichtung nach Anspruch 6, dadurch gekennzeichnet, daß das Stellglied (SG) zwei Transistoren (TS1, TS2) mit entgegengesetztem Leitfähigkeitstyp aufweist, deren Emitter zusammengeschaltet sind.

8.  Meßeinrichtung nach Anspruch 6, dadurch gekennzeichnet, daß das Stellglied (SG, SGW) einen Nebenschlußregler bildet.

9.  Meßeinrichtung nach den Ansprüchen 1 und 2, dadurch gekennzeichnet, daß den zusätzlichen Photoelementen (ZP, ZPW) Potentiometer (PH, PMW) zugeordnet sind.

10. Meßeinrichtung nach den Ansprüchen 1 und 2, dadurch gekennzeichnet, daß die Lichtquellen (L, LW) von lichtemittierenden Dioden gebildet und in Reihe geschaltet von einer Konstantstromquelle (KSQ) gespeist sind.

## Claims

1.  Photoelectric length or angle measuring device for measuring the relative position of two objects movable relative to one another, with a plurality of sensing units (AE, AEW) spaced from one another in the measuring direction and to be connected to one of the objects, each with its own light source (L, LW) for sensing a graduation (T) of a scale unit (M) to be connected to the other object, and with a device (AWE) for additive superposition and subsequent processing of the sensing signals (S, SW) generated by the sensing units (AE, AEW), characterized in that, in order to keep a predetermined relationship between the levels of the maximum amplitudes (AM, AMW) of the two sensing signals (S, SW), the sensing units (AE, AEW) each comprise an additional photoelement (ZP, ZPW) for generating a brightness signal (HS, HSW) proportional to the brightness of the light source (L, LW), and are connected to a control unit (RE, REW) for controlling and monitoring the brightness of the light sources (L, LW), wherein the control unit (RE, REW), for monitoring the brightness of the light sources (L, LW) compares at least one of the brightness signals (HS, HSW) with a predetermined reference signal (RFS, RFSW) on falling below a certain minimum brightness and/or with at least two pairs of brightness signals (HSW) compares the relative difference between two pairs of brightness signals (HSW) with a certain proportion of one of these brightness signals (HSW) generated by voltage division.

2.  Photoelectric length or angle measuring device for measuring the relative position of two objects movable relative to one another, with a plurality of sensing units (AE, AEW) spaced from one another in the measuring direction and to be connected to one of the objects, each with its own light source (L, LW) for sensing a graduation (T) of a scale unit (M) to be connected to the other object, and with a device (AWE) for additive superposition and subsequent processing of the sensing signals (S, SW) generated by the sensing units (AE, AEW), characterized in that, in order to keep a predetermined relationship between the levels of the maximum amplitudes (AM, AMW) of the sensing signals (S, SW), each sensing unit (AE, AEW) comprises an additional photo-element (ZP, ZPW) for generating a brightness signal (HS, HSW) proportional to the brightness of the light source (L, LW), and is connected to a control unit (RE, REW) for controlling the brightness of the corresponding light source (L, LW), wherein each control unit (RE, REW) is connected to a device for generating a common predetermined pilot signal (FS, FSW) and for its monitoring is connected to a device (SS) for comparing the control signals (RS, RSW) of the control units (RE, REW) with a predetermined reference signal (BS).

3.  Measuring device according to claim 2, characterized in that the pilot signal (FSW) can be regulated by a pilot signal controller (FR).

4.  Measuring device according to claim 3, characterized in that control signals (RSW) of the control units (REW) are present at the input of the pilot signal controller (FR).

5.  Measuring device according to claim 4, characterized in that a predetermined limit value signal (GS) of a limit value unit (GE) is additionally present at the input of the pilot signal controller (FR).

6.  Measuring device according to claims 1 and 2, characterized in that the control unit (RE, REW) comprises a comparator (V, VW) and an adjusting element (SG, SGW).

7.  Measuring device according to claim 6, characterized in that the adjusting element (SG) comprises two transistors (TS1, TS2) of opposite conductivity types, whose emitters are connected together.

8.  Measuring device according to claim 6, characterized in that the adjusting element (SG, SGW) forms a shunt regulator.

9. Measuring device according to claims 1 and 2, characterized in that potentiometers (PM, PMW) are associated with the additional photo-elements (ZP, ZPW).

10. Measuring device according to claims 1 and 2, characterized in that the light sources (L, LW) are formed by light emitting diodes and are supplied in series by a constant current source (KSQ).

## Revendications

1. Dispositif de mesure de longueur ou d'angle photo-électrique pour la mesure de la position relative de deux objets pouvant se déplacer l'un par rapport à l'autre, comportant plusieurs unités de lecture (AE, AEW) munies chacune d'une source lumineuse (L, LW) propre, distantes les unes des autres dans la direction de mesure et pouvant être reliées à l'un des objets, pour la lecture d'une graduation (T) d'une mesure matérialisée (M) pouvant être reliée avec l'autre objet, et un dispositif (AWE) pour la superposition additionelle et l'exploitation subsiquente des signaux de lecture (S, SW) produits par les unités de lecture (AE, AEW), caractérisé en ce que les unités de lecture (AE, AEW) comportent, pour le maintien constant d'un rapport de valeurs donné des amplitudes maximales (AM, AMW) des deux signaux de lecture (S, SW), chaque fois une cellule photo-électrique supplémentaire (ZP, ZPW) pour produire un signal de luminosité (HS, HSW) proportionnel à la luminosité de la source lumineuse (L, LW), et sont reliées à une unité de réglage (RE, REW) pour le réglage et la surveillance des luminosités des sources lumineuses (L, LW), l'unité de réglage (RE, REW) comparant, pour la surveillance des luminosités des deux sources lumineuses (L, LW) au moins l'un des signaux de luminosité (H, HSW) avec un signal de référence (RFS, RFSW) donné pour détecter le dépassement d'un minimum de luminosité donné, et/ou compare pour au moins deux paires de signaux de luminosité (HSW) la différence relative entre deux paires de signaux de luminosité (HSW) avec une partie donnée obtenue par division de tension de l'un des signaux de luminosité (HSW).

2. Dispositif de mesure de longueur ou d'angle photo-électrique pour la mesure de la position relative de deux objets pouvant se déplacer l'un par rapport à l'autre, comportant plusieurs unités de lecture (AE, AEW) munies chaque fois d'une source lumineuse (L, LW) propres, distantes les unes des autres dans la direction de mesure et pouvant être reliées à l'un des objets, pour la lecture d'une graduation (T) d'une mesure matérialisée (M) pouvant être reliée avec l'autre objet, et un dispositif (AWE) la superposition additionelle l' exploitation subsiquente des signaux de lecture (S, SW) produits par les unités de lecture (AE, AEW), caractérisé en ce que chaque unité de lecture (AE, AEW) comporte, pour le maintien constant d'un rapport de valeurs donné des amplitudes maximales (AM, AMW) des signaux de lecture (S, SW) une cellule photo-électrique supplémentaire (ZP, ZPW) pour produire un signal de luminosité (HS, HSW) proportionnel à la luminosité de la source lumineuse (L, LW) et est relié à une unité de réglage (RE, REW) pour le réglage de la luminosité de la source lumineuse (L, LW) correspondante, chaque unité de réglage (RE, REW) étant reliée avec un dispositif qui produit un signal pilote (FS, FSW) donné commun et, pour sa surveillance, avec un dispositif (SS) qui compare les signaux de réglage (RS, RSW) des unités de réglage (RE, REW) avec un signal de référence (BS) prédéterminé.

3. Dispositif de mesure selon la revendication 2, caractérisé en ce que le signal pilote (FSW) peut être réglé par un régleur de signal pilote (FR).

4. Dispositif de mesure selon la revendication 3, caractérisé en ce que les signaux de réglage (RSW) des unités de réglage (REW) sont présents à l'entrée du régleur de signal pilote (FR).

5. Dispositif de mesure selon la revendication 4, caractérisé en ce qu'un signal de seuil (GS) prédéterminé d'une unité à seuil (GE) est disponible en plus à l'entrée du régleur de signal pilote (FR).

6. Dispositif de mesure selon les revendications 1 et 2, caractérisé en ce que l'unité de réglage (RE, REW) comporte un comparateur (V, VW) et un élément de réglage (SG, SGW).

7. Dispositif de mesure selon la revendication 6, caractérisé en ce que l'élément de réglage (SG) comporte deux transistors (TS1, TS2) de type de conductibilité opposé dont les émetteurs sont reliés entre eux.

8. Dispositif de mesure selon la revendication 6, caractérisé en ce que l'élément de réglage (SG, SGW) forme un shunteur.

9. Dispositif de mesure selon les revendications 1 et 2, caractérisé en ce que des potentiomètres (PM, PMW) sont associés aux cellules photo-électriques supplémentaires (ZP, ZPW).

10. Dispositif de mesure selon les revendications 1 et 2, caractérisé en ce que les sources lumineuses (L, LW) sont constituées par des diodes électroluminescentes, sont branchées en série et sont alimentées par une source de tension constante (KSQ).

## FIG.1

## FIG.2

## FIG.3

FIG.4

FIG. 5

## FIG. 6

RFS → — WS1

HS1, HS2 → +

TG

## FIG.7

AEW1

TW

MW

XW

TW

TW

AEW3

AEW4

TW

AEW2

AW

## FIG. 8

## FIG. 9

15

FIG.10